# EUROPEAN PATENT SPECIFICATION

(11) **EP 2 693 006 B1**
(45) Date of publication and mention of the grant of the patent: **30.03.2016**
(21) Application number: 11862480.8
(22) Date of filing: 30.03.2011
(51) Int. Cl.: F01L 3/20, F01L 3/08, F02M 21/02, F01L 3/24, F02M 21/04

(54) **FUEL GAS SUPPLY DEVICE FOR GAS ENGINE**
BRENNGASVERSORGUNGS VORRICHTUNG FÜR EINEN GASMOTOR
DISPOSITIF D'ALIMENTATION EN GAZ COMBUSTIBLE POUR MOTEUR À GAZ

(43) Date of publication of application: 05.02.2014
(73) Proprietor: Mitsubishi Heavy Industries, Ltd., Tokyo 108-8215 (JP)
(72) Inventor: ISHIDA, Michiyasu, Tokyo 108-8215 (JP); ESAKI, Minoru, Tokyo 108-8215 (JP)
(74) Representative: Hoffmann Eitle
(86) International application number: PCT/JP2011/058126
(87) International publication number: WO 2012/131957

(56) References cited:
- EP-A1- 2 264 307
- WO-A1-2009/078120
- DE-C- 444 722
- JP-A- 4 303 121
- JP-A- 6 010 672
- JP-A- 49 075 918
- JP-A- 2003 138 917
- JP-B2- 3 653 031
- JP-U- 55 052 545
- JP-U- 57 030 359
- JP-U- 63 191 258

## Description

### TECHNICAL FIELD

The present invention relates to a fuel gas supply device for supplying a fuel gas of a gas engine into an inlet path.

### BACKGROUND ART

As one example of a configuration of a gas engine for mixing an air flowing through an inlet path and a fuel gas, there is a configuration in which an injection nozzle is connected to a gas supply pipe, so that the fuel gas is injected through the nozzle into an inlet manifold.

In that case, the injection nozzle for the fuel gas protrudes into the inlet manifold. For this reason, the airflow in the inlet manifold is disturbed, so that the circulation resistance against the sucked air tends to increase.

In a conventional gas engine in which a fuel gas is supplied to the inlet path, as disclosed in, for example, Japanese Patent Application Laid-open No. H9-268923, a gas injection nozzle is disposed across an inlet pipe. Accordingly, the gas injection nozzle becomes a resistance against the flow of the sucked air, resulting in an increase in pumping work amount required for suction of new air or fuel-containing new air into a cylinder. This causes an increase in fuel consumption rate.

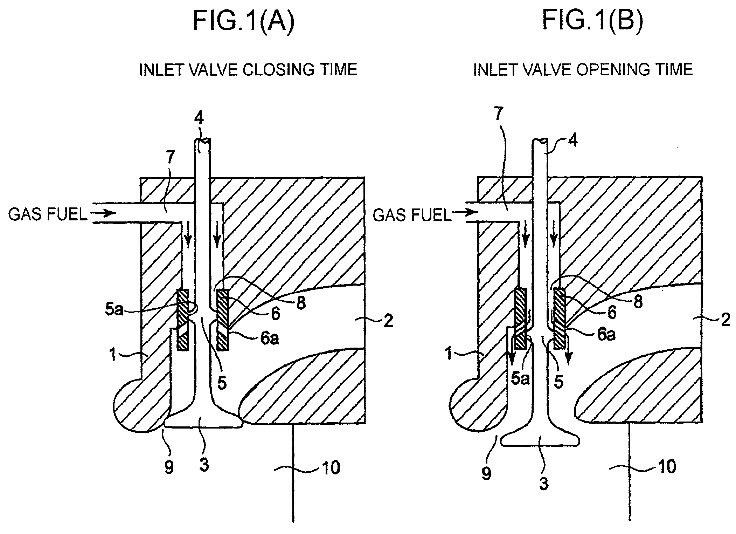

Thus, as shown in the inlet valve closing time and the inlet valve opening time shown in the accompanying FIG. 1(A) in Japanese Patent No. 3653031, 1 is a cylinder head; 2, an inlet path in the cylinder head 1; 3, an inlet valve; and 4, an inlet valve rod of the inlet valve 3. The inlet valve rod 4 is provided with a projection 5 having a larger diameter than the inlet valve rod 4, and having a cylindrical surface 5a concentric with the inlet valve rod 4 and in parallel with the inlet valve rod 4. The cylindrical surface 5a of the projection 5 is slidably fitted in a sleeve 6 fixed to the cylinder head 1 in such a manner as to protrude into the inlet path 2 in the cylinder head 1.

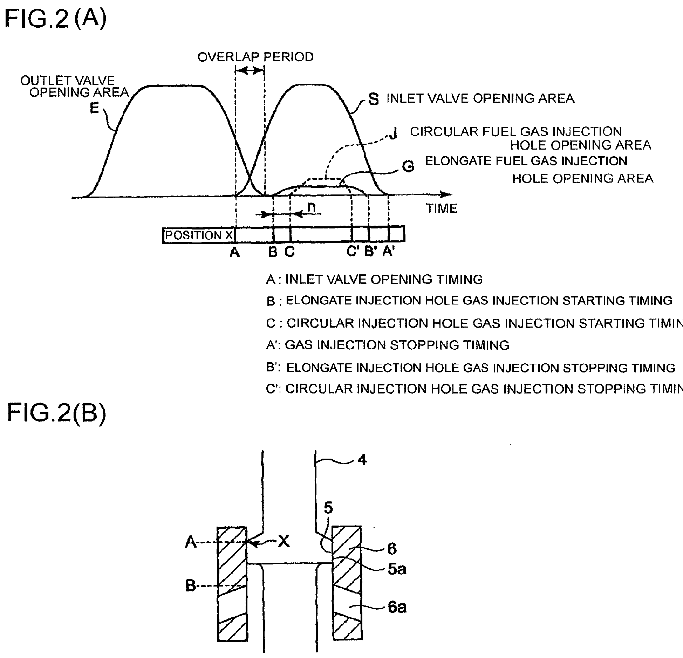

Further, as shown in FIG. 2(B), the sleeve 6 is provided therein with a plurality of fuel gas injection holes 6a.

Then, when the inlet valve rod 4 is closed, the cylindrical surface 5a of the projection 5 is on the fuel gas path 7 side of the fuel gas injection hole 6a. Accordingly, the fuel gas is not injected from the fuel gas injection hole 6a into the inlet path 2.

On the other hand, when the inlet valve rod 4 is opened, the cylindrical surface 5a of the projection 5 moves closer to the inlet path 2 than the fuel gas injection hole 6a. Accordingly, the fuel gas from the fuel gas path 7 is injected through the fuel gas injection hole 6a into the inlet path 2. Such a technology is disclosed.

EP 2 264 307 A1 describes a fuel injector with plural nozzle holes with the same cross-sectional shape and which can individually set the flow rate of each nozzle hole. The plural nozzle holes have a cross-sectional shape which is substantially out-of-round, the cross-section being perpendicular to a central axis of each of the nozzle holes. The cross-section of each of the nozzle holes is rotated around the central axis of each of the nozzle holes. A rotation angle of the cross-section is set in such a manner that a relationship between a conical surface of the circular cone and the rotation angle is different among at least two of the nozzle holes.

JP 2003-138917 A represents the closest prior art document.

However, in accordance with the structure of Patent Document 2, when the fuel gas injected into the inlet path 2 is injected in a short time, the fuel gas in the inlet path 2 and the sucked air may not be stirred sufficiently.

### DISCLOSURE OF THE INVENTION

The present invention was made in order to solve such a deficiency, and its object is to achieve the improvement of the combustion efficiency in the combustion chamber and the improvement of the fuel consumption rate by forming, in the inner circumferential surface of a sleeve into which a projection provided at an inlet valve rod is slidably fitted, fuel gas injection holes situated within the movement region of the projection of the inlet valve rod and opened and closed with the movement of the inlet valve rod, such that the fuel gas injection holes are each formed in an elongated hole shape, to thereby lengthen the injection period of the fuel gas injected into an inlet path and promote mixing with the supply air flowing through the inlet path.

In order to solve such a problem, in accordance with the present invention, there is provided a gas engine fuel gas supply device for supplying a fuel gas into an inlet path by a vertical movement of an inlet valve rod by opening and closing of an inlet valve. The device includes: a projection formed at a part in an axial direction of the inlet valve rod, and having a larger outer diameter than a surrounding area thereof; a sleeve into which the projection is slidably fitted; and a fuel gas injection hole formed in the sleeve to have an elongated shape elongated in an axial direction of the sleeve, and establishing communication between an inside of the sleeve and the inlet path with a downward movement of the projection of the inlet valve rod.

With such a configuration, the fuel gas injection hole is formed in an elongated shape, so that the injection time of the fuel gas to be injected into the inlet path increases. This promotes mixing with the supply air flowing through the inlet path. As a result, the combustion efficiency in the combustion chamber is improved, and the fuel consumption rate is improved.

Further, in the present invention, preferably, an upper end edge of the elongated fuel gas injection hole is desirably moved in a fuel gas injection timing advance direction.

With such a configuration, the fuel gas injection hole is in an elongated hole shape, so that the amount of the fuel gas to be injected at the beginning of start of the fuel gas injection is reduced. For this reason, the movement in the fuel gas injection timing advance direction provides effects of ensuring the fuel gas injection amount and promoting stirring of air and the fuel gas throughout the fuel gas injection step.

Still further, in the present invention, preferably, the elongated fuel gas injection hole is desirably configured such that a radius R at each end and a distance H between centers of the radii R at opposite ends (between ellipse axes) satisfy radius R < center distance H.

With such a configuration, the length of the elongated fuel gas injection hole is increased, so that the injection time of the fuel gas is increased. As a result, it is possible to promote stirring with the supply air flowing through the inlet path.

Furthermore, in the present invention, preferably, the elongated fuel gas injection hole is desirably configured such that a ratio R/H of a radius R at each end and a distance H between centers of the radii R at opposite ends (between elongated hole axes) falls within a range of 0.2 ≤ R/H ≤ 1.3.

With such a configuration, when the ratio becomes smaller than 0.2, the circulation resistance against the fuel gas increases, resulting in an insufficient amount of the fuel gas supplied. When the ratio becomes smaller than 1.3, the circulation resistance against the fuel gas decreases. Accordingly, the fuel gas is introduced into the inlet tube in a short period. As a result, it is possible to prevent the occurrence of a problem that stirring with air is not sufficiently performed.

Still further, in the present invention, preferably, an elongated hole axis L2 of the fuel gas injection hole is desirably tilted with respect to an axis L1 of the sleeve.

With such a configuration, during the operation of the inlet valve in the vertical direction, the sliding contact position between the outer circumferential surface of the projection of the inlet valve rod and the outer edge of the fuel gas injection hole changes in the circumferential direction during the operation of the inlet valve. Accordingly, it is possible to inhibit the damages and an increase in partial wear to the outer circumferential surface.

In the inner circumferential surface of the sleeve into which the projection provided at the inlet valve rod is fitted, fuel gas injection holes situated within the movement region of the projection of the inlet valve rod, and to be opened and closed with the movement of the inlet valve rod are each formed in an elongated hole. As a result, the injection period of the fuel gas injected into the inlet path is lengthened, which promotes mixing with the supply air flowing through the inlet path. Accordingly, the combustion efficiency in the combustion chamber is improved, which allows the improvement of the fuel consumption rate.

### BRIEF DESCRIPTION THE DRAWINGS

FIGS. 1(A) and 1(B) each show an essential part configuration of a fuel gas supply device for a gas engine in accordance with an embodiment of the present invention, where FIG. 1(A) shows a schematic cross-sectional view at the inlet valve closing time, and FIG. 1 (B) shows a schematic cross-sectional view at the inlet valve opening time;
FIG. 2 (A) shows a relation view of the opening areas of inlet and outlet valves and the opening area of a fuel gas injection hole with respect to the time (or the crank angle), and FIG. 2 (B) shows a relative positional relation view between a projection of the inlet valve and the fuel gas injection holes of the sleeve;

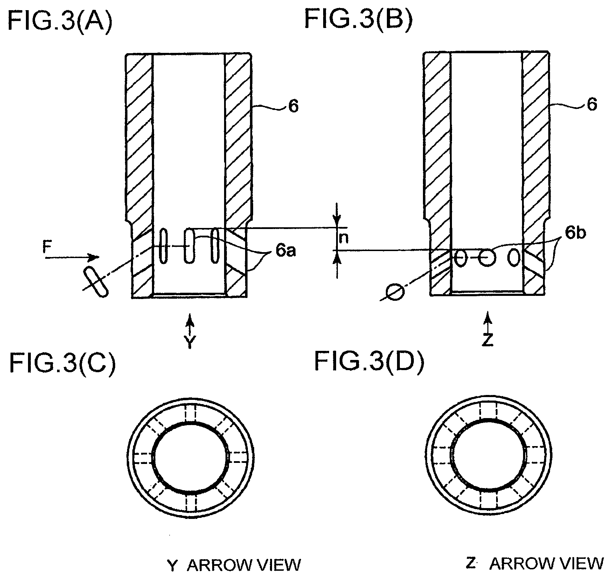

FIGS. 3 (A) shows a configuration view of a fuel gas injection hole of a sleeve in accordance with the present invention, FIG. 3(B) shows a configuration view of a fuel gas injection hole of a related-art technology, FIG. 3 (C) shows a view on an arrow Y in FIG. 3(A), and FIG. 3(D) shows a view on an arrow Z of FIG. 3(B);

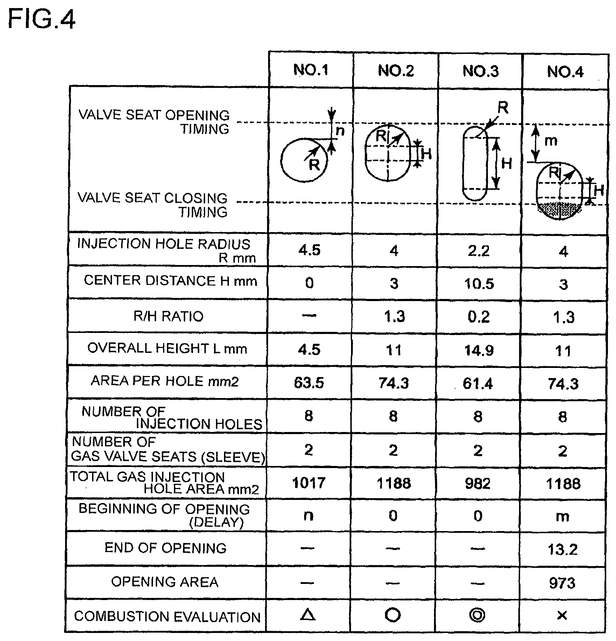

FIG. 4 shows a comparison view of test results according to the shape of the fuel gas injection hole of the present invention; and

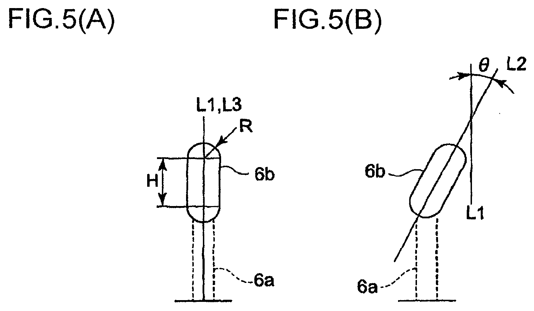

FIG. 5 shows a view on an arrow F of FIG. 3(A).

### BEST MODE FOR CARRYING OUT THE INVENTION

Below, the present invention will be described in detail by way of embodiments shown in the accompanying drawings.

However, the dimensions, materials, shapes, the relative arrangement thereof, and the like described in the embodiments are, unless otherwise specified, not construed as limiting the scope of the invention only thereto, and are only mere illustrative examples.

In FIG. 1, 1 is a cylinder head; 2, an inlet path in the cylinder head 1; 3, an inlet valve; and 4, an inlet valve rod of the inlet valve 3. The inlet valve rod 4 is provided with a projection 5 having a larger diameter than the inlet valve rod 4 and having a cylindrical surface 5a concentric with the inlet valve rod 4 and in parallel with the inlet valve rod 4. The circumferential surface 5a of the projection 5 is slidably fitted into a sleeve 6 (ordinary name: gas valve seat) fixed to the cylinder head 1 so as to protrude into the inlet path 2 in the cylinder head 1.

In an example in FIG. 1, the cylinder head 1 is provided with the inlet valve 3. FIG. 1 (A) shows the case where the inlet valve 3 is closed. FIG. 1 (B) shows the case where the inlet valve 3 is fully opened. The inlet valve rod 4 of the inlet valve 3 is shown in a midway cut form, but is reciprocally driven in the vertical direction by a valve driving device not shown through the cylinder head 1, thereby to open and close the inlet port 9.

Incidentally, the cylinder head 1 is provided with an outlet valve not shown. The inlet valve 3 and the outlet valve are reciprocally driven so as to open and close the inlet and outlet ports at a prescribed timing by a valve driving device not shown mechanically connected to a crank shaft not shown by a timing gear or the like.

Further, the fuel gas injection hole 6a provided in the sleeve 6 is placed within the sliding region of the projection 5 of the inlet valve 3.

At the position of the inlet valve 3 shown in FIG. 1(A), the fuel gas injection hole 6a is in a closed state. Thus, a fuel gas supply path 7 and the inlet path 2 are separated from each other by the projection of the inlet valve 3.

In FIG. 1(B), the inlet valve 3 is in a fully opened state. Thus, the fuel gas supply path 7 and the inlet path 2 communicate with each other via a gap 8 between the outer circumference of the inlet valve rod 4 and the inner circumference of the sleeve 6, and the fuel gas injection hole 6a of the sleeve 6. As a result, the fuel gas is injected through the fuel gas injection holes 6a radially in a direction toward the inlet path 2.

FIG. 2 (A) shows the relation between the opening areas of inlet and outlet valves and the opening area of the fuel gas injection hole 6a with respect to the time (or the crank angle), and FIG. 2(B) shows a relative positional relation between the projection 5 of the inlet valve 3 and the fuel gas injection holes 6a of the sleeve 6.

In FIG. 2(A), the overlapping portion of an outlet valve opening area E and an inlet valve opening area S is the overlap period in which the inlet and outlet valves are both opened.

B represents the case of an elongated fuel gas injection hole 6a, and C represents the fuel gas injection starting timing of a circular fuel gas injection hole 6b. B' and C' each represent the fuel gas injection stopping timing.

Then, G (solid line) represents the opening area of the elongated fuel gas injection hole 6a, and J (broken line) represents the opening area of the circular fuel gas injection hole 6b. The opening area of G (solid line) and the opening area of J (broken line) are substantially the same.

At the inlet valve opening timing A, at FIG. 2 (B), the starting end X of the projection 5 of the inlet valve rod 4 is at the position A, so that the fuel gas supply path 7 and the inlet path 2 in FIG. 1 do not communicate with each other.

Namely, the fuel gas injection hole 6a is closed.

When the inlet valve 3 goes down, and the starting end X reaches the starting end B of the injection hole 6a, at B of FIG. 2(A), the fuel gas injection hole 6a starts to open. As the inlet valve 3 further goes down, the fuel gas injection hole opening area increases. When the inlet valve 3 turns to go up, the opening area turns to decrease. When the starting end X reaches the starting end B of the fuel gas injection hole 6a again, at B' in FIG. 2(A), the fuel gas injection hole 6a is closed.

Then, FIG. 3 (A) shows the shape of the fuel gas injection hole 6a as one example of the present invention, and FIG. 3(B) shows the conventional shape thereof.

As shown in FIG. 3(A), each fuel gas injection hole 6a is formed in an elongated shape in parallel with the axis of the sleeve 6. There are formed eight fuel gas injection holes 6a each having an elongated shape tilted obliquely downward from the inner side surface toward the outer circumferential surface of the sleeve 6. The eight fuel gas injection holes 6a are spaced substantially equidistantly along the outer circumference of the sleeve 6.

As indicated with the conventional fuel gas injection hole shape 6b in FIG. 3(B), each fuel gas injection hole 6b has a circular shape, so that the circulation resistance against the fuel gas is small. Accordingly, the fuel gas tends to be injected in a larger amount in a shorter time. As shown in FIG. 2(A), for the opening area J (broken line) of the circular fuel gas injection hole 6b, the opening and closing operation is performed in a shorter period (crank angle) than for the opening area G (solid line) of the elongated fuel gas injection hole 6a.

Accordingly, in the case of the elongated fuel gas injection hole 6a, the position at which the staring end X reaches the starting end B of the injection hole 6a is formed at a position (the fuel gas injection timing advance direction) allowing the starting end X to reach the starting end B earlier than for the opening position of the circular fuel gas injection hole 6b by n. The amount of n may be appropriately decided by the specification of the engine.

Further, as indicated with the F arrow view of FIG. 3(A) in FIG. 5 (A), the distance between centers of the radii R at opposite ends (between elongated hole axes) H is sufficiently larger than the radius R at each opposite end.

However, the fuel gas injection hole 6a provided in the sleeve 6 has a configuration in which the region of the opening upper and lower ends of the elongated hole is disposed within the sliding region of the projection 5, and thereby to be opened and closed.

Incidentally, in the present embodiment, as indicated with the F arrow view of FIG. 3 (A) in FIG. 5(B), the elongated hole axis L2 of the elongated fuel gas injection hole 6a may be formed with a tilt angle θ with respect to the axis L1 of the sleeve 6.

In this case, during the operation of the inlet valve 3, the sliding contact position between the outer circumferential surface 5a of the projection 5 of the inlet valve rod 4 and the outer edge of the fuel gas injection hole 6a changes into the circumferential direction during the inlet valve operation. Accordingly, it is possible to suppress damages and wear to the outer circumferential surface.

FIG. 4 shows a comparison view of the combustion test results according to the shape of the fuel gas injection hole 6a.

Incidentally, the numerical values of the list show examples by experiments.

In FIG. 4, No. 1 is for a conventional circular shape; No. 2, for a first example of the present invention; No. 3, for a second example of the present invention; and No. 4, for the case where No. 2 is adapted to a mirror engine.

In the case of the conventional circular shape of No. 1, the fuel gas injection hole total area is 1017 mm². The flow rate resistance against the fuel gas is small due to the circular shape. Accordingly, a fuel gas was introduced into the inlet path in a short period. As a result, presumably, it was not possible to sufficiently stir the fuel gas in the combustion chamber 10. This results in the combustion evaluation not posing a practical problem, but leaving room for improvement.

No. 2 is for an elongated shape. However, the distance between the radius centers at opposite ends is smaller than R, and R/H = 1.3, where R is each radius at opposite ends, and the fuel gas injection hole total area is 1188 mm². The fuel gas injection hole total area is larger than that of No. 1.

However, the shape is an elongated hole, and the radius R is reduced. Accordingly, the injection time increases by the length equivalent to the increase in fluid gas flow rate resistance, so that stirring with the sucked air sufficiently proceeds, resulting in substantially satisfactory combustion.

No. 3 is for an elongated shape. However, the distance between the radius centers at opposite ends is larger than R, and R/H = 0.2, where R is each radius at opposite ends, and the fuel gas injection hole total area is 982 mm². The fuel gas injection hole total area is smaller than that of No. 1.

However, the shape is an elongated hole, and the radius R is reduced. Accordingly, the injection time increases by the length equivalent to a further increase in fuel gas flow rate resistance relative to No.2, so that stirring with the sucked air proceeds, resulting in satisfactory combustion.

No. 4 is the result of a test of the case where the same shape as that of No. 2 is adopted, and is applied to a mirror engine, and shows the case where the opening timing of the inlet valve 3 is delayed by m. The inlet valve opening period is shortened, and the opening area of the fuel gas injection hole is 973 mm² (the shaded area of FIG. 4 is closed). As a result, it was not possible to supply a required amount of the fuel gas.

Therefore, the fuel gas injection holes 6a provided in the sleeve 6 are configured to be disposed within the sliding region of the projection 5 of the inlet valve 3, and thereby to be opened and closed. For this reason, for R and the center distance H (between elongated hole axes), the ratio of R/H may be determined based on the sliding region of the projection 5 of the inlet valve 3.

From the results up to this point, by forming the fuel gas injection hole 6a in the shape of an elongated hole, the introduction time of a fuel gas into the inlet tube 2 is ensured. This promotes stirring of air and the fuel gas, which can provide best combustion. Accordingly, the combustion efficiency in the combustion chamber is improved, and the fuel consumption rate is improved.

### INDUSTRIAL APPLICABILITY

The invention is desirably used for a fuel gas supply device of a gas engine in which the injection part of a fuel gas for supplying the fuel gas into the inlet path is prevented from protruding into the inlet path, thereby to reduce the circulation resistance against the sucked air flowing in the inlet path.

### EXPLANATION REFERENCE NUMERALS

- 1: Cylinder head

- 2: Inlet path
- 3: Inlet valve
- 4: Inlet valve rod
- 5: Projection
- 6: Sleeve
- 7: Fuel gas path
- 8: Cylindrical hollow part
- 9: Inlet port
- 10: Combustion chamber
- 5a: Outer circumferential surface
- 6a: Fuel gas injection hole

## Claims

1. A gas engine fuel gas supply device for supplying a fuel gas into an inlet path (2) by a vertical movement of an inlet valve rod (4) by opening and closing of an inlet valve (3),
the device comprising:
a projection (5) formed at a part in an axial direction of the inlet valve rod (4), and having a larger outer diameter than a surrounding area thereof,
a sleeve (6) into which the projection (5) is slidably fitted, and
a fuel gas injection hole (6a) formed in the sleeve (6) and the inlet path (2) with a downward movement of the projection (5) of the inlet valve rod (4)
**characterized in that**
the fuel injection hole (6a) formed in the sleeve (6) has an elongated hole shape elongated in an axial direction of the sleeve, and establishing communication between an inside of the sleeve (6) .

2. The gas engine fuel gas supply device according to claim 1, wherein an upper end edge of the fuel gas injection hole (6a) is moved in a fuel gas injection timing advance direction.

3. The gas engine fuel gas supply device according to claim 1, wherein the fuel gas injection hole (6a) is configured such that a radius R at each end and a distance H between centers of the radii R at opposite ends (between elongated hole axes) satisfy radius R < center distance H.

4. The gas engine fuel gas supply device according to claim 1, wherein the fuel gas injection hole (6a) is configured such that a ratio R/H of a radius R at each end and a distance H between centers of the radii R at opposite ends (between elongated hole axes) falls within a range of 0.2 ≤ R/H ≤ 1.3.

5. The gas engine fuel gas supply device according to claim 1, wherein an elongated hole axis L2 of the fuel gas injection hole (6a) is tilted with respect to an axis L1 of the sleeve (6).

## Patentansprüche

1. Brenngaszufuhreinrichtung für einen Gasmotor zum Zuführen eines Brenngases in einen Einlasspfad (2) durch eine vertikale Bewegung einer Einlassventilstange (4) eines Einlassventils (3),
wobei die Einrichtung umfasst:
einen Vorsprung (5), der an einem Teil in einer axialen Richtung der Einlassventilstange (4) ausgebildet ist und einen größeren äußeren Durchmesser aufweist, als ein umgebendes Gebiet davon,
eine Hülse (6), in die der Vorsprung (5) schiebbar eingepasst ist, und
ein Brenngaseinspritzloch (6a), das in der Hülse (6) und dem Einlasspfad (2) mit einer Abwärtsbewegung des Vorsprungs (5) der Einlassventilstange (4) ausgebildet ist,
**dadurch gekennzeichnet, dass**
das Kraftstoffeinspritzloch (6a), das in der Hülse (6) ausgebildet ist, eine längliche Lochform aufweist, die in einer axialen Richtung der Hülse verlängert ist und eine Verbindung zwischen einem Inneren der Hülse (6) bildet.

2. Brenngaszufuhreinrichtung für einen Gasmotor nach Anspruch 1, wobei eine obere Endkante des Brenngaseinspritzlochs (6a) zu einem Brenngaseinspritzzeitpunkt in eine Vorschubrichtung bewegt wird.

3. Brenngaszufuhreinrichtung für einen Gasmotor nach Anspruch 1, wobei das Brenngaseinspritzloch (6a) so ausgestaltet ist, dass ein Radius R an jedem Ende und ein Abstand H zwischen Zentren der Radien R an gegenüberliegenden Enden (zwischen länglichen Lochachsen) Radius R < Zentrumsabstand H erfüllen.

4. Brenngaszufuhreinrichtung für einen Gasmotor nach Anspruch 1, wobei das Brenngaseinspritzloch (6a) so ausgestaltet ist, dass ein Verhältnis R/H eines Radius R an jedem Ende und ein Abstand H zwischen Zentren der Radien R an gegenüberliegenden Enden (zwischen länglichen Lochachsen) in einen Bereich von 0,2 ≤ R/H ≤ 1,3 fällt.

5. Brenngaszufuhreinrichtung für einen Gasmotor nach Anspruch 1, wobei eine Achse L2 des länglichen Lochs des Brenngaseinspritzlochs (6a) bezüglich einer Achse L2 der Hülse (6) geneigt ist.

## Revendications

1. Dispositif d'alimentation d'un moteur à gaz en gaz combustible, permettant d'introduire un gaz combustible dans un trajet d'admission (2) par un mouvement vertical d'une tige (4) de soupape d'admission par l'ouverture et la fermeture d'une soupape d'admission (3),
le dispositif comprenant :
une saillie (5) formée sur une partie dans une direction axiale de la tige (4) de soupape d'admission et ayant un diamètre externe plus grand qu'une surface environnante de celui-ci,
une chemise (6) dans laquelle la saillie (5) est montée coulissante, et
un orifice d'injection (6a) de gaz combustible formé dans la chemise (6) et le trajet d'admission (2) avec un mouvement descendant de la saillie (5) de la tige (4) de soupape d'admission
**caractérisé en ce que**
l'orifice d'injection (6a) de combustible formé dans la chemise (6) possède une forme d'orifice allongé se prolongeant dans la direction axiale de la chemise et établit une communication entre une partie interne de la chemise (6).

2. Dispositif d'alimentation d'un moteur à gaz en gaz combustible selon la revendication 1, dans lequel un bord terminal supérieur de l'orifice d'injection (6a) de gaz combustible est déplacé dans une direction d'avancée de calage d'injection du gaz combustible.

3. Dispositif d'alimentation d'un moteur à gaz en gaz combustible selon la revendication 1, dans lequel l'orifice d'injection (6a) de gaz combustible est conçu de façon qu'un rayon R à chaque extrémité et qu'une distance H entre les centres des rayons R aux extrémités opposées (entre les axes de l'orifice allongé) satisfasse la relation rayon R < distance H entre les centres.

4. Dispositif d'alimentation d'un moteur à gaz en gaz combustible selon la revendication 1, dans lequel l'orifice d'injection (6a) de gaz combustible est conçu de façon qu'un rapport R/H d'un rayon R à chaque extrémité et d'une distance H entre les centres des rayons R aux extrémités opposées (entre les axes de l'orifice allongé) soit situé dans la plage suivante : 0,2 R/H ≤ 1,3.

5. Dispositif d'alimentation d'un moteur à gaz en gaz combustible selon la revendication 1, dans lequel un axe L2 d'orifice allongé de l'orifice d'injection (6a) de gaz combustible est incliné par rapport à un axe L1 de la chemise (6).
